Europäisches Patentamt

European Patent Office

Office européen des brevets

(11) Publication number: **0 107 608**
**B1**

# EUROPEAN PATENT SPECIFICATION

(45) Date of publication of patent specification: **12.11.86**

(21) Application number: **83630154.9**

(22) Date of filing: **19.09.83**

(51) Int. Cl.⁴: **C 09 D 3/72,** C 08 L 75/04, C 08 K 3/22, C 08 F 299/06, C 08 G 18/67, B 60 C 13/00

(54) Electron beam curable pigmented acrylated polyurethanes.

(30) Priority: **20.09.82 US 419864**

(43) Date of publication of application:
**02.05.84 Bulletin 84/18**

(45) Publication of the grant of the patent:
**12.11.86 Bulletin 86/46**

(84) Designated Contracting States:
**DE FR GB IT**

(56) References cited:
**DE-A-1 916 500**
**GB-A-1 147 732**
**US-A-2 713 884**
**US-A-3 989 609**

**CHEMICAL ABSTRACTS, vol. 84, no. 8, 23rd February 1976, page 122, no. 46282f, Columbus, Ohio, US**

**The file contains technical information submitted after the application was filed and not included in this specification**

(73) Proprietor: **THE GOODYEAR TIRE & RUBBER COMPANY**
**1144 East Market Street**
**Akron, Ohio 44316 (US)**

(72) Inventor: **Miller, Wallace Raymond**
**2136 Manor Road**
**Uniontown Ohio 44685 (US)**
Inventor: **Saracsan, Jeffrey William**
**125 Thorlone Avenue**
**Akron Ohio 44312 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

## Description

### Technical field

This invention relates to an electron beam curable pigmented acrylated polyurethane composed essentially of 100 parts of an acrylated polyurethane and at least about 0.1 to 5 or more parts of pigment and a method of curing the same by radiating said pigmented polyurethane with 0.1 to 15 megarads of radiation from an electron beam source.

### Background

Photocurable polyurethanes have been used in making photographic plates, sight shields and related articles. These articles have been essentially unpigmented and consequently the ability of pigments to protect and improve the physical properties of the cured polyurethanes as well as to improve the aesthetic effect has not been used.

### Disclosure and practice of the invention

We have discovered that acrylated polyurethane composed essentially of 100 parts of acrylated polyurethane and at least 0.1 to 5 or more parts of pigment forms an electron beam curable composition at a radiation level of 0.1 to 15 megarads which gives cured compositions having improved physical properties and especially improved aesthetic values.

The acrylated polyurethanes can be prepared by use of an acrylate diluent or an acrylate reactant to incorporate the acrylate in the polyurethane.

Examples of acrylate reactants are the hydroxy and amino groups containing acrylates. Representative examples of these are the hydroxyl alkyl acrylates or hydroxyl alkyl methacrylates where the alkyl groups preferably have 2 to about 12 carbon atoms such as the ethyl, propyl and butyl radicals. The amino analogs of these hydroxyl alkyl acrylates and methacrylates can be used also but do not yield generally as stable a material.

The acrylate diluents are represented by the acrylates that can function as a plasticizer or diluent for the polyurethanes. Representative of these are the esters of the acrylic and methacrylic acids or their anhydrides with a hydroxy compound such as the representative mono alcohols, the diodes and triols. The acrylic and methacrylic esters where the alkyl radical is methyl, ethyl, propyl and higher can be dissolved or dispersed in the polyurethane to acrylate the polyurethane composition.

Particularly desirable are the acrylate diluents produced by reacting an acrylic acid or methacrylic acid or their anhydrides with a polyol such as the glycols or ether glycols of 2 to about 12 carbon atoms. Also the acrylate diluent can be added to the polyurethane reactants before or during their reaction to produce a polyurethane having acrylate in the composition. Alternatively the acrylate reactants can be used to react with the organic polyisocyanate to give a built-in acrylate in the polyurethane composition when the unreacted organic polyisocyanate is reacted with the polyol and/or curative to produce the polyurethane.

The nature of this invention may be more readily understood and appreciated by reference to the following representative examples wherein all parts and percentages are by weight unless otherwise indicated.

### Example 1
#### Preparation of prepolymer

Into a 2000 ml glass resin vessel were added 1000 grams of about 3000 molecular weight polycaprolactone diol with a reactive number of 39.2. A heating mantle and a resin kettle top with stirrer, thermometer and degassing attachments were fitted to the resin pot. With stirring the temperature was raised to 82°C. The resin was degassed for 30 minutes. Next, the temperature was raised to 100°C and 156 grams of isophorone-diisocyanate were added to the degassed material which produced a mixture with the ratio of one mole of polyol for two moles of diisocyanate. With continued stirring the temperature of the materials was raised to 110°C. To allow for complete reaction, the mixture was stirred at this temperature for 45 minutes. The resulting urethane prepolymer was then degassed. The % free NCO was found to be 2.51.

#### Acrylating the prepolymer

The prepolymer in the resin kettle was cooled to 72°C. To this material was added 94% pure 2-hydroxyethylmethacrylate (HEMA) in the ratio of 1.04 equivalents of acrylate to 1.00 equivalents of isocyanate which worked out to be 8.6 grams of HEMA per 100 grams of prepolymer. Next 2.56 grams of a tin catalyst was added. With continued stirring, the temperature of the reaction slowly climbed to 81°C. The mixture was then cooled slowly for 45 minutes until the temperature dropped to 66°C. The resin kettle top (along with its attachments) was removed. The bottom vessel was covered with aluminum foil and left to set overnight at room temperature.

Eighteen hours later on the following day a % free NCO analysis of the product was taken and found to be at a value of 0.07. With stirring the contents of the kettle was heated to 72°C (registered by a thermometer) and 9 grams of butanol were added to get rid of the remaining NCO groups. The warm acrylated prepolymer was then poured into a clear quart jar.

#### Preparation of pigmented masterbatch

In an 800 ml glass beaker were poured 200 grams of the acrylated prepolymer. The contents were heated to 70°C and 0.4 gram of hydroquinone was added. After heating another ten minutes at 70°C, 33 grams of PDI epoxy 2100 (60% TiO$_2$ · 40% epoxy) was added to the mix with stirring. The pigmented batch was then heated to 82°C and degassed. Final composition: 100 parts clear acrylated urethane, 10 parts TiO$_2$, 6.5 parts epoxy resin.

Radiation curing

Into a 15"×6"×.020" Teflon™ coated aluminum cavity was poured 50 grams of the warmed masterbatch. A draw down bar was used to take away the excess. The plate with the liquid laden cavity was placed on a conveyor belt and made to pass under the electron beam (taking less than one second) giving the urethane 1.1 megarads of radiation. A second pass under the beam gave the material 1.1. megarads of radiation more for a total dosage of 2.2 megarads.

Since there was a slight tackiness to the surface of the urethane, it was dusted with talc. The film could then be stripped from the Teflon™. It was flexible, rubbery and possessed good strength.

Physicals

| | |
|---|---|
| Tensile | 680 psi (46.886×10$^5$Pa) |
| Ultimate elongation | 120% |
| 100% modulus | 520 psi (35.854×10$^5$Pa) |

Preparation of prepolymer

Same procedure was followed as for Example #1. Analysis of prepolymer was 2.47% free NCO this time.

Acrylating the prepolymer

Same description as before except substitute 94% pure HEA (2-hydroxyethylacrylate) for HEMA. Used 7.6 g HEA per 100 grams prepolymer. Final % free NCO of acrylated prepolymer was 0.09 which was "killed" with 10 grams of butanol.

Preparation of pigmented masterbatch

Same as for Example #1

Radiation curing

Same procedure as for Example #1 except that the material was cycled twice under the electron beam at 1.0 megarads per cycle which gave a total radiation dosage to the urethane of 2.0 megarads.

Physicals

| | |
|---|---|
| Tensile | 740 psi (51.023×10$^5$Pa) |
| Ultimate elongation | 120% |
| 100% Modulus | 500 psi (34.47×10$^5$Pa) |

Example 2

A prepolymer was prepared by reacting 2 moles of isophorone diisocyanate with a mole of polycaprolactone diol of 3000 molecular weight and then reacted with 1.04 moles of HEMA to cap the prepolymer. This capped prepolymer was used to form a pigmented prepolymer by adding and mixing therein to each 100 parts of capped prepolymer 16 parts of a blend of 10 parts of titanium dioxide and 6 parts of epoxy resin 828, a trade designation of a resin formed by reacting bis phenol A with epichlorohydrin. This blend of pigment and polyurethane was labelled blend A.

Other pigmented polyurethanes were made by using other hydroxylalkyl acrylate or methacrylate to cap the prepolymer of this example by replacing the HEMA with respectively hydroxyl propyl acrylate (HPA) and hydroxylethyl acrylate (HEA) in the preparation of the polyurethanes and then adding 16 parts of epoxy resin-titanium-resin to give a white pigmented polyurethane.

The pigmented blend made with HPA containing polyurethane was labelled Blend B and the one made with the HEA containing blend was labelled Blend C. A hundred parts of each of the blends, A, B and C, respectively, was mixed with 1 part of a trifunctional isocyanate, a cross-linker, designated by the tradename Desmodur-N by Mobay Chemical Company. These blends were labelled A—N, B—N and C—N respectively to indicate that Blends A, B and C now contained Desmodur-N. To 100 parts aliquot of each of Blends A—N, B—N and C—N 25 parts of powdery silicon dioxide was added and incorporated. Also, 5 parts of trimethylol propane triacrylate, was added to another 100 parts aliquot of Blends A—N, B—N and C—N, respectively. Then aliquots of each of the blends, A, B and C and blends A—N, B—N and C—N alone or containing 25 parts of silicon dioxide and 5 parts of the cross-linking promoter, trimethylol propane triacrylate were subjected to radiation from an electron beam source at rates of 1 megarads and higher to cure the aliquots. The blends containing the cross-linking promoter cured faster. All the cured samples had good tensile and flex properties as well as cold cracking and weather resistance.

Tires were painted with the curable white pigmented polyurethane composition of these examples to give a white side wall strip to the tire. Then the white sidewall strip was subjected to 5 megarads of electron beam radiation to cure the composition to yield a white side tire. The strip had good adhesive and flex life. Also, these curable pigmented polyurethane compositions were used to form belts, preferably thin and as belt covers for regular rubber belts.

This invention has been described and exemplified with electron beams although it should be appreciated any high energy radiation can be used, with the term high energy radiation being used to include electron beams, x-rays and gamma rays.

**Claims**

1. A method of forming a cured pigmented acrylated polyurethane coating on a shaped rubber characterized by applying a coat of a composition composed essentially of 100 parts acrylated polyurethane and 0.1 to 40 parts of a pigment to a shaped rubber and radiating said coating with 0.1 to 15 megarads of high energy radiation to form a coating having good flex life.

2. A method according to Claim 1, characterized in that the shaped rubber is the sidewall of a cured tire.

**Patentansprüche**

1. Verfahren zur Herstellung einer gehärteten pigmentierten acrylierten Polyurethanbeschichtung auf einem geformten Kautschuk, dadurch gekennzeichnet, daß ein Überzug aus einer Masse aus im wesentlichen 100 Teilen eines acrylierten Polyurethans und 0,1 bis 40 Teilen eines Pigments auf einen geformten Kautschuk aufgebracht wird und der Überzug mit 0,1 bis 15 Megarad einer hochenergetischen Strahlung unter Bildung eines Überzugs mit einem guten Biegevermögen bestrahlt wird.

2. Verfahren nach Anspruch 1, dadurch gekennzeichnet, daß der geformte Kautschuk die Seitenwand eines vulkanisierten Reifens ist.

**Revendications**

1. Procédé en vue de former un revêtement de polyuréthane acrylé pigmenté durci sur un caoutchouc façonné, caractérisé en ce qu'il consiste à appliquer, à un caoutchouc façonné, une couche d'une composition constituée essentiellement de 100 parties de polyuréthane acrylé et de 0,1 à 40 parties d'un pigment, puis soumettre ce revêtement à une irradiation à haute énergie de 0,1 à 15 mégarads en vue de former un revêtement possédant une bonne résistance à la flexion.

2. Procédé selon la revendication 1, caractérisé en ce que le caoutchouc façonné est le flanc d'un bandage pneumatique vulcanisé.